# EUROPÄISCHE PATENTANMELDUNG

(11) **EP 0 696 498 A2**
(43) Veröffentlichungstag der Anmeldung: **14.02.1996**
(21) Anmeldenummer: 95111999.9
(22) Anmeldetag: 31.07.1995
(51) Int. Cl.: B29C 41/04, B29C 41/22, B32B 27/34

(54) **Innenbeschichteter Hohlkörper**

(30) Priorität: 12.08.1994 DE 4428534
(71) Anmelder: BAYER AG, D-51368 Leverkusen (DE)
(72) Erfinder: Grigat, Ernst, Dr., D-51381 Leverkusen (DE); Driessen, Hans-Gerd, D-47809 Krefeld (DE); Post, Udo, D-51469 Bergisch Gladbach (DE)

(57) **Zusammenfassung**

Die Erfindung betrifft Hohlkörper aus Gußpolyamid, die auf der Innenfläche mit Polyurethan beschichtet sind.

## Beschreibung

Die Erfindung betrifft Hohlkörper aus Gußpolyamid, die auf der Innenfläche mit Polyurethan beschichtet sind.

Hohlkörper aus Kunststoffen, z.B. Treibstofftanks, sind bekannt. So sind aus der EP-A 357 995 Mehrschichtformkörper auf Polyamidbasis bekannt, die mit einer ausgehärteten Duromerschicht beschichtet sind. Die Duromerschicht wird auf dem Polyamid direkt durch Aufbringen von Polyisocyanat und Epoxid durch Aushärten erzeugt. Die so auf der Innenseite beschichteten Polyamide eignen sich z.B. zur Herstellung von Flüssigkeitsbehältern wie Kfz-Tanks, Rohre, in denen Flüssigkeiten transportiert werden, Dosen usw. Aufgrund der Beschichtung sind sie gegen polare und unpolare Solventien in der Regel undurchlässig (Barrier-Effekt).

Es wurde nun gefunden, daß man auf Polyamidbasis Hohlkörper herstellen kann, die auf der Innenseite mit einer Polyurethanschicht überzogen sind, welche kein Epoxidharz enthält.

Gegenstand der Erfindung ist daher ein Verfahren zur Herstellung von mehrschichtigen Hohlkörpern mit Barrier-Eigenschaften auf Polyamidbasis mit mindestens einer außenliegenden Polyurethanschicht, dadurch gekennzeichnet, daß in einer Hohlform in einer oder mehreren Raumrichtungen eine Polyamid-Polymerisationsmischung eingebracht und auspolymerisiert wird und nach Auspolymerisation dieser Mischung anschließend eine Polyurethan-Polymerisationsmischung eingebracht wird und diese ebenfalls unter gleichzeitigem Drehen in zwei Raumrichtungen auspolymerisiert wird.

Polyamid im erfindungsgemäßen Sinn ist Polyamid 66 (Polyhexamethylenadipamid) oder Polyamid 6 (Polycaprolactam) oder Copolyamide mit Hauptbestandteilen 6 oder 66 oder Compounds mit Hauptbestandteil der genannten Polyamide. Bevorzugt ist durch aktivierte anionische Polymerisation hergestelltes Polyamid 6 oder durch aktivierte anionische Polymerisation hergestelltes Copolyamid mit Hauptbestandteil Polycaprolactam.

Die aktivierte anionische Polymerisation von Lactamen zu Polyamiden wird in technischem Maßstab so durchgeführt, daß man einerseits eine Lösung von Katalysator in Lactam, gegebenenfalls mit Schlagzähmodifikator, und andererseits eine Lösung von Aktivator in Lactam herstellt, wobei üblicherweise beide Lösungen so zusammengesetzt sind, daß ein Zusammengeben im gleichen Verhältnis die gewünschte Gesamtrezeptur ergibt. Das ist jedoch nicht notwendig. Man kann ebenso andere Zusammensetzungen wählen, beispielsweise eine konzentrierte Aktivator- sowie Katalysatorschmelze zu einer Lactamschmelze dosieren. Weitere Additive können je nach Verträglichkeiten in die Aktivator-, Katalysator- oder gegebenenfalls Lactamschmelze gegeben werden.

Die Polymerisation erfolgt durch Vermischen der Einzellösungen zur Gesamtrezeptur bei 80°C bis 200°C, bevorzugt 100°C bis 140°C.

Als Lactame kommen cyclische Lactame mit 6 bis 12 C-Atomen in Frage, bevorzugt Laurinlactam und besonders bevorzugt ε-Caprolactam.

Der Katalysator im erfindungsgemäßen Sinne ist ein Alkali- oder Erdalkalilactamat, bevorzugt als Lösung in Lactam, besonders bevorzugt Natriumcaprolactamat in ε-Caprolactam.

Der Aktivator im erfindungsgemäßen Sinne können N-Acyllactame oder Säurechloride oder, bevorzugt, aliphatische Isocyanate, besonders bevorzugt Oligomere des Hexamethylendiisocyanats sein. Als Aktivator kann sowohl die Reinsubstanz wie auch bevorzugt eine Lösung, beispielsweise in N-Methylpyrrolidon, dienen.

Weitere Additive können beispielsweise Schlagzähmodifikatoren, Flammschutzmittel, Nukleierungshilfsmittel, Farbstoffe, Füllöle, Stabilisatoren, Oberflächenverbesserer, Füll- oder Verstärkungsstoffe und Entformungshilfsmittel sein.

Die Polyurethanschicht besteht erfindungsgemäß aus einem gegebenenfalls zusätzlich Harnstoffgruppen enthaltenden Polyurethanwerkstoff. Dieser wird in der Form durch Zusammengeben einer Polyolmischung und einer Isocyanatmischung hergestellt.

Die Polyolmischung kann bestehen aus
50 bis 95 Gew.-% di- oder höherfunktionell OH-terminierten Polyestern bzw. Polyestergemischen oder bevorzugt di- oder höherfünktionell OH-terminierten Polyethern bzw. Polyethergemischen, oder Gemischen daraus, und
5 bis 50 Gew.-% Katalysatoren, Kettenverlängerern und Additiven wie beispielsweise Schmiermittel
mit bevorzugt einer Gesamt-OH-Zahl der Mischung von 100 bis 500, besonders bevorzugt 150 bis 300 (OH-Zahlen bestimmt nach DIN 53240).

Die Isocyanatmischung kann bestehen aus aromatischen di- oder höherfunktionellen Isocyanaten oder deren Prepolymeren. Bevorzugt sind 4,4'-Diisocyanatodiphenylmethan, Prepolymere des 4,4'-Diisocyanatodiphenylmethans, phosgenierte Anilin-Formaldehyd-Kondensate, sowie Gemische daraus.

Bevorzugt sind Isocyanatmischungen mit einem NCO-Gehalt von 20 bis 38 Gew.-%, besonders bevorzugt von 25 bis 34 Gew.-%.

Das erfindungsgemäße Verfahren zur Herstellung der Hohlkörper besteht darin, daß eine Hohlform, beispielsweise eine Form wie sie üblicherweiser z.B. zur Herstellung einwandiger Gußpolyamid-Tanks verwendet wird, gleichzeitig um zwei Achsen rotiert wird und Schicht für Schicht mit den reaktiven Mischungen zur Herstellung der einzelnen Schichten, nacheinander von außen nach innen, so befüllt wird, daß die folgende Schicht jeweils nach dem Ausreagieren der vorhergehenden Schicht aufgebracht wird. Die Formtemperatur muß im Falle eines Gußpolyamideinsatzes 160°C bis 220°C betragen. Wenn keine innere Gußpolyamidschicht mehr gewünscht wird, kann der Tank während der weiteren Beschichtung mit Polyurethan stetig abkühlen.

Eine Verfahrensvariante besteht darin, statt der Hohlform einen fertigen Polyamidtank wie bereits beschrieben um zwei Achsen zu rotieren und in der gleichen Weise mit inneren Schichten auszukleiden. Die Auskleidung kann bei Temperaturen von -20°C bis 200°C, vorzugsweise 6°C bis 120°C, geschehen.

Die erfindungsgemäßen Hohlkörper, vorzugsweise Tanks, können zur Lagerung und/oder dem Transport von Flüssigkeiten verwendet werden, insbesondere von brennbaren und/oder giftigen und/oder umweltschädlichen Flüssigkeiten. Bevorzugt ist die Verwendung der erfindungsgemäßen Tanks als Motorradtanks mit gleichzeitig hoher mechanischer Beanspruchbarkeit und niedriger Treibstoffdurchlässigkeit.

Die Hohlkörper, z.B. Tanks, können durch die für Kunststoffe üblichen Methoden mechanisch nachbearbeitet werden.

Erfindungsgemäß können so Hohlkörper hergestellt werden zur thermischen und/oder mechanischen Abschirmung, beispielsweise als Außenkörper für Motorradauspuffe. Weiterhin können so Rohre, z.B. zum Transport von Materialien wie Flüssigkeiten (z.B. Wasser, Benzin, Öle usw.), hergestellt werden.

### Beispiele

Eine rechteckige Rotationsgußform mit 15 l Inhalt wird unter Rotation um zwei Achsen gleichmäßig auf 200°C aufgeheizt.

Dann wird kurz angehalten, 600 g einer Polyamid-Polymerisationsmischung eingefüllt, und sofort um zwei Achsen gleichzeitig weiterrotiert. Die Polyamid-Polymerisationsmischung bestand aus
76,0 Gew.-% Caprolactam,
15,0 Gew.-% Schlagzähmodifikator KU 2-8112®, (Lieferant: Fa. Bayer AG),
5,0 Gew.-% Katalysator (18 gew.-%ige Lösung von Natriumlactamat in ε-Caprolactam) und
4,0 Gew.-% Aktivator (Oligomeres des Hexamethylendiisocyanat als 70 gew.-%ige Lösung in N-Methylpyrrolidon).

Nach 5 Minuten ist die Polymerisation beendet. Nun wird wieder angehalten und die Polyurethan-Mischung (800 g) eingefüllt. Man rotiert sofort nach dem Einfüllen wieder um zwei Achsen gleichzeitig.

Die Reaktionsinischung zur Erzeugung der Polyurethan-Innenschicht bestand aus 100 Gew.-Teilen einer Polyolmischung und 150 Gew.-Teilen einer Isocyanatmischung.

Die Polyolmischung mit einer OH-Zahl von 300 bestand aus
51,9 Gew.-% eines Polyethers der OH-Zahl 35, der durch Addition einer Mischung aus 86,55 % Propylenoxid und 13,45 % Ethylenoxid auf Trimethylolpropan hergestellt wurde,
9,0 Gew.-% Adipinsäure-di-n-butylester,
5,0 Gew.-% einer 50 gew.-%igen Kalium-Aluminiumsilikat-Lösung in Rizinusöl,
0,1 Gew.-% 33 %ige Lösung von Trimethylendiamin in Dipropylenglykol.

Die Isocyanatmischung bestand aus
50 Gew.-% eines Semiprepolymers, welches durch Umsetzung von
(I) 89 Gew.-Teilen 4,4'-Di(isocyanatophenyl)methan mit
(II) 11 Gew.-Teilen eines Polyethers der OH-Zahl 515, der durch Addition von Propylenoxid auf Propylenglykol hergestellt wurde.
Nach einer Reaktionszeit von 4 Minuten wurde entformt.

Man erhielt einen Hohlkörper mit einer Polyamidaußenschicht und einer Polyurethan-Innenschicht. Die Polyurethaninnenschicht weist nach 4 Wochen eine Benzinaufnahme von <0,6 Gew.-% auf.

## Patentansprüche

1. Verfahren zur Herstellung von mehrschichtigen Hohlkörpern mit Barrier-Eigenschaften auf Polyamidbasis mit mindestens einer außenliegenden Polyurethanschicht, dadurch gekennzeichnet, daß in einer Hohlform in einer oder mehreren Raumrichtungen eine Polyamid-Polymerisationsmischung eingebracht und auspolymerisiert wird und nach Auspolymerisation dieser Mischung anschließend eine Polyurethan-Polymerisationsinischung eingebracht wird und diese ebenfalls unter gleichzeitigem Drehen in zwei Raumrichtungen auspolymerisiert wird.

2. Hohlkörper hergestellt nach Anspruch 1.
